# DEMANDE DE BREVET EUROPEEN

(11) **EP 1 138 590 A1**
(43) Date de publication de la demande: **04.10.2001**
(21) Numéro de dépôt: 00810277.4
(22) Date de dépôt: 31.03.2000
(51) Int. Cl.: B62K 15/00

(54) **Dispositif de patinette pour bagage**

(71) Demandeur: Allaman, Raoul, 1226 Thonex/Genève (CH)
(72) Inventeur: Allaman, Raoul, 1226 Thonex/Genève (CH)

(57) **Abrégé**

Il comporte une plate-forme marche-pied (1) escamotable (6) munie d'une roue arrière (2) et d'une roue avant (3) directionnelle contrôlée par un guidon (5) escamotable (6). Plate-forme et guidon intégrés à un bagage (4).

## Description

La présente invention concerne un véhicule à propulsion humaine pour le transport des personnes.

Il est bien connu que nos villes sont engorgées de voitures et que toutes les politiques d'urbanisme tentent d'en limiter l'utilisation à la périphérie de celles-ci pour céder la place aux transports publics, aux pistes cyclables et à des zones piétonnes.

Le but de la présente invention est de résoudre ce problème de fluidité.

Le but est obtenu par le dispositif de patinette selon l'invention, qui se distingue par les caractéristiques énumérées à la revendication 1.

Le dessin illustre à titre d'exemple une forme d'exécution de la patinette pour bagage selon l'invention.

La figure 1 est une vue en élévation de la patinette à bagage en position escamotée.

La figure 2 est une vue en coupe/élévation de la patinette à bagage en position de fonctionnement.

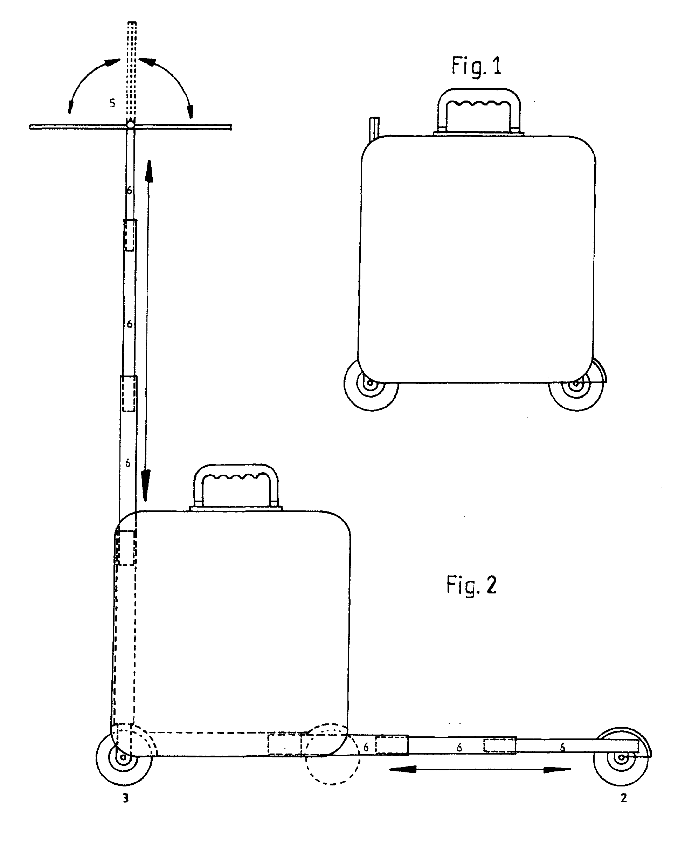

La figure 2 illustre une forme d'exécution du dispositif de patinette selon l'invention :
il comporte une plate-forme structurée (1), ici de forme rectangulaire et généralement réalisée en aluminium. Cette plate-forme (1) est munie à l'arrière en sa partie inférieure d'au moins une roue (2) reliée à cette dernière par exemple par un axe transversal ordinaire.

La plate-forme (1) est composée par exemple de plusieurs éléments lui conférant la possibilité d'être escamotable (6), la partie fixe de cette extension étant par exemple intégrée au bagage (4).

La plate-forme (1) est également munie en sa partie avant d'une roue directionnelle (3) contrôlée par exemple par un guidon (5) extensible (6) dont la partie fixe est par exemple intégrée au bagage. Le bagage devient véhicule et le véhicule devient bagage tout en restant récipient.

La mobilité de l'utilisateur est considérablement améliorée, car le dispositif permet de couvrir d'importantes distances en un temps réduit et un effort amoindri. En effet, l'énergie nécessaire à un pas correspond à une poussée permettant de parcourir plusieurs mètres.

Le conducteur a un pied sur la plate-forme et pousse au sol de l'autre pied, les deux mains posées sur le guidon, ses documents ou effets personnels bien rangés dans le bagage.

La forme du dispositif ou du bagage peut varier selon les critères esthétiques, mais les matériaux le composant seront généralement le plastique et le métal.

Un système de freinage peut améliorer la sécurité du véhicule sans toutefois se révéler indispensable.

Le dispositif est extrêmement simple à fabriquer et d'un prix de revient modique.

Il peut être facilement adapté à de nombreux modèles de bagages existants.

## Revendications

1. Dispositif de patinette **caractérisé par** le fait qu'il comporte une plate-forme marche-pied (1) munie de roues (2 et 3), reliées à la structure d'un bagage (4) permettant à l'utilisateur de l'utiliser comme véhicule.

2. Dispositif de patinette selon la revendication 1, **caractérisé par** le fait que la plate-forme (1) munie de roues (2 et 3) reliée à la structure d'un bagage (4) est structurée pour recevoir un guidon (5) de direction.

3. Dispositif de patinette selon la revendication 1 ou la revendication 2 **caractérisé par** le fait que la plate-forme marche-pied (1) et le guidon (5) de direction sont escamotables (6).
